# EUROPÄISCHE PATENTANMELDUNG

(11) **EP 1 233 595 A1**
(43) Veröffentlichungstag der Anmeldung: **21.08.2002**
(21) Anmeldenummer: 01103776.9
(22) Anmeldetag: 15.02.2001
(51) Int. Cl.: H04L 29/12

(54) **Bearbeitung einer IP-Adresse auf Systemebene**

(71) Anmelder: SIEMENS AKTIENGESELLSCHAFT, 80333 München (DE)
(72) Erfinder: Oelmaier, Gebhard, 84453 Muehldorf (DE); Pichlmair, Egid, 85461 Bockhorn (DE)

(57) **Zusammenfassung**

Die Erfindung betrifft ein Verfahren und eine Systemkomponente, das/die eine Routine zur Konvertierung der Formate (12,14) einer IP-Adresse (10) an zentraler Stelle im System bereitstellt. Damit wird die Formatkonvertierung als Standard für alle IP-basierten Applikationsprogramme eingeführt. Die Systemkomponente wird durch ein speziell angepaßtes Betriebssystem, einen erweiterten Compiler oder durch einen spezifischen Hardware-Mikroprozessor gebildet.

## Beschreibung

Die Erfindung liegt auf dem Gebiet der Datenkommunikation über das Internet und betrifft insbesondere ein Verfahren und eine Systemkomponente, mittels dessen/der mindestens eine Routine zur Verarbeitung von IP-Adressen, die bei einer Erstellung von einer Vielzahl von internet-spezifischen Applikationsprogrammen notwendig ist, bereitgestellt wird.

Da die Kommunikation über das Internet zunehmend an Bedeutung gewinnt, steigt ebenso die Bedeutung für die Entwicklung von internetspezifischen Programmen.

Sollen beispielsweise zwei über das Internet erreichbare Maschinen Daten austauschen, muß erst einmal die Grundlage dafür geschaffen sein, daß sie miteinander kommunizieren können. Dazu wird jeder über das Internet erreichbaren Maschine eine eineindeutige Adresse zugeordnet. Diese besteht gegenwärtig (bei dem IPv4 Protokoll) aus je vier Zahlen, deren Wert zwischen 0 und 255 liegt. Üblicherweise werden zur leichteren Benennung und besseren Erinnerungsfähigkeit Namen eingesetzt, die wiederum diesen numerischen Adressen zugeordnet sind.

Um Netzwerkarchitekturen grundsätzlich möglichst kompatibel zu machen, ist von der "International Standards Organization (ISO) eine internationale Norm, das sogenannte OSI-Referenzmodell (Open Systems Interconnection) eingeführt worden. Die zugrundeliegende Idee für dieses Normenmodell ist die Idee die Netzwerkarchitektur in hierarchisch strukturierten Schichten zu gliedern, die aufeinander aufbauen. Dabei kommuniziert eine bestimmte Schicht einer Maschine mit der entsprechenden Schicht der anderen Maschine. Die Regeln, aufgrund deren diese Kommunikation abläuft sind in einem Protokoll definiert.
Das bekannte IP (Internet Protocoll) Vermittlungsprotokoll basiert auf transparenten Internet-Datagrammen und ist grundsätzlich verbindungsunabhängig.
Das IP-Protokoll hat grundsätzlich folgenden Ablauf:
Die Transportschicht nimmt Nachrichten auf und gliedert sie in Datagramme, die über das Internet übertragen werden. Wenn alle Datagramme die Zielmaschine erreicht haben, werden sie von der dortigen Transportschicht vereinigt, so daß die Originalnachricht abrufbar ist.

Ein sogenannter IP-Header ist jeder Nachricht vorangestellt und besteht aus mehreren Einträgen, die unter anderem die Quelladresse und die Zieladresse umfassen. Die Adressen zeigen die Netzwerk- und die Hostnummer an.

Eine IP-Adresse ist grundsätzlich eine 32-Bit-Adresse (= 4-Byte-Adresse), die aus einer Netzidentifikation und einer Hostadresse besteht. Als Format für die einzelnen Adressen hat sich eine Vier-Punkt-Notation durchgesetzt. Die vier einzelne Bytes der Adresse sind jeweils durch einen Punkt getrennt. Festgelegte Bereiche sind für die Netzwerkidentifikation und die Identifikation der Hostadresse bestimmt. Diese beiden Bereiche sind in ihrer Größe variabel. Grundsätzlich werden hierfür vier unterschiedliche Darstellungsmöglichkeiten verwendet. Diese erlauben die Codierung einer unterschiedlichen Anzahl von Netzwerken und Hosts.

Um einerseits die Effizienz der Übertragung einer Nachricht über ein Netz zu steigern, ist es wichtig, das Verhältnis zwischen IP-Header und der eigentlichen Nachricht möglichst klein zu halten. Dazu muß der für die Darstellung der IP-Adresse erforderliche Speicherplatz möglichst klein gehalten werden. Deshalb werden IP-Adressen häufig in komprimierter, gepackter Form übertragen.

Andererseits ist es erforderlich, auch ein unkomprimiertes Format, also ein explizites Format bzw. eine explizite Darstellung zu verarbeiten.

Nahezu bei allen IP-basierten Lösungen ist deshalb eine Verarbeitung und insbesondere eine Konvertierung der unterschiedlichen IP-Adreßformate (beispielsweise die Konvertierung der expliziten Darstellung in die komprimierte und umgekehrt) erforderlich.

Vergegenwärtigt man sich weiterhin, wie häufig IP-Adressen verarbeitet werden, so besteht hier ein immenser Bedarf, diese IP-Adressen-Verarbeitung mit möglichst maximaler Performance auszuführen. Denn in der Verarbeitung von IP-Adressen liegt ein die Performance des Gesamtsystems wesentlich mitbestimmender Faktor: Ist bereits die Verarbeitung - beispielsweise die Konvertierung - einer IP-Adresse verzögert, dann ist auch zwangsläufig die darauf basierende Applikation verzögert. Dieser Zustand ist aus Performancegründen nicht tragbar.

Um IP-Adressen optimiert zu verarbeiten, wird neben dem expliziten Format (bei einer Hexadezimal Darstellung 11 Byte, bei einer Dezimaldarstellung 15 Byte) zusätzlich ein komprimiertes Format (z.B. ein 32-Bit-Wort - 4Byte) verwendet, das es ermöglicht, die Daten in gepackter Form zu transferieren. Soll nun eine solche IP-Adresse im Rahmen einer Applikation verarbeitet werden, so ist nahezu immer eine Konvertierung von einem Format in das andere erforderlich. Es muß also eine Routine zur Umwandlung aus dem expliziten Format in das komrimierte Format und aus dem komprimierten Format in das explizite Format zur Verfügung gestellt werden.

Bisher wurde in jeder Applikationssoftware einzeln und unabhängig voneinander eine Routine mit entsprechender Konvertierungsfunktionalität vorgesehen. Da die Routine zur Formatumwandlung von IP-Adressen aber zum einen sehr häufig benötigt wird und zum anderen sehr zeitkritisch ist, ist das bisherige Vorgehen, nämlich die Routine dezentral vorzusehen, nicht sinnvoll.

Auch aus Gründen der Performance erweist sich dieses Vorgehen als nachteilig.

Es ist zwar bekannt, bestimmte Routinen in sogenannte Programmbibliotheken vorzusehen, beispielsweise DLL-Files (Dynamic Link Library Files). In diesem Zusammenhang zeigt die US 5634114 ein Verfahren, das die korrekte Zuordnung eines DLL-Files und eines dieses File aufrufenden Applikationsprogramms steuert. Denn in einer solchen Programmbibliothek werden häufig verschiedene Versionen eines DLL-Files abgelegt. Benötigt die Applikation eine ganz bestimmte Version dieses DLL-Files, dann wird mit diesem Verfahren die Auswahl des passenden DLL-Files überwacht.
Die Möglichkeit, eine Routine in eine Programmbibliothek zu stellen ist allerdings nur eine der möglichen Maßnahmen, die die vorliegende Erfindung vorsieht, um eine Format-Konvertierungs-Routine für IP-Adressen an zentraler Stelle im System und auf Systemebene (und nicht mehr auf der Ebene des Applikationsprogramms) vorzusehen.

Als nachteilig erweist es sich ferner, daß bisher für jede einzelne IP-Applikation jeweils eine eigene IP-Adressen-Verarbeitungsroutine geschrieben, übersetzt und getestet werden muß. Dies erhöht die Fehlerwahrscheinlichkeit und führt zu einer redundanten Entwicklungsarbeit.

Die vorliegende Erfindung hat sich deshalb zur Aufgabe gestellt ein Verfahren und entsprechende Systemkomponenten zur Verfügung zu stellen, die eine möglichst schnelle Verarbeitung von IP-Adressen, insbesondere von deren Formaten, ermöglichen ohne daß für jedes Applikationsprogramm eine eigene Routine generiert und übersetzt werden muß, so daß die Routine als Standard für mehrere IP-Applikationen dienen kann.

Die Lösung der Aufgabe gemäß Anspruch 1 besteht insbesondere darin, daß eine Routine zur Verarbeitung von IP-Adressen, insbesondere eine Konvertierungsroutine für verschieden Formate von IP-Adressen, an zentraler Stelle innerhalb eines Computersystems vorgesehen ist und nicht für jede einzelne IP-Applikation einzeln und erneut programmiert und übersetzt zu werden braucht.

Das Integrieren der Routine auf Systemebene bzw. in eine Systemkomponente kann dadurch erfolgen, indem die Routine in ein Betriebssystem integriert wird.

Alternativ kann die Routine auch in einem Compiler integriert sein, der entweder einen entsprechenden Aufruf einer Routine im Betriebssystem veranlaßt, falls letzteres dies unterstützt. Andernfalls enthält der Compiler spezifischen Prozessor-Code, der die Verarbeitung von IP-Adreßformaten, insbesondere deren Konvertierung, ausführt. Ebenso liegt ein für die Verarbeitung, insbesondere Konvertierung, von IP-Adressen ausgelegter Assembler oder Interpreter im Rahmen der Erfindung.

Es ist jedoch auch möglich, die Routine zur Verarbeitung von IP-Adressen in Hardware umzusetzen. Dazu wird zumindest ein Register vorgesehen, dessen Inhalt entsprechenden Rechenoperationen unterzogen wird, die das gewünschte Ergebnis liefern. Vorzugsweise werden solche Bauteile verwendet, die es ermöglichen, daß zwischen dem Input und dem Output nur ein Takt liegt. Dies führt zu einer signifikant gesteigerten Performance.

Es bestehen verschiedene Versionen des Internet Protokolls (beispielsweise das heute gängige IPv4 und dessen Nachfolgeentwicklung das IPv6). Eine hauptsächliche Änderung von der Version 4 zur Version 6 besteht in der Vergrößerung des IP-Adreßraumes. Durch die Erweiterung der Adreßlänge von bisher 32 Bit auf 128 Bit entsteht eine enorm hohe Zahl von möglichen Adressen. Damit steigt natürlich auch die erforderliche Rechenleistung für die Verarbeitung dieser Adressen. Von daher entsteht die Notwendigkeit, eine effiziente Verarbeitung der komplexeren IPv6 Adressen zur Verfügung zu stellen.
In einer bevorzugten Ausführungsform der Erfindung wird deshalb das Verfahren auf das IPv6 angewendet.

Mit dem erfindungsgemäßen Verfahren entsteht der Vorteil, daß nicht jede einzelne Anwenderroutine zur Verarbeitung der IP-Adressen einzeln getestet werden muß, sondern, daß die Routine einmal an zentraler Stelle zur Verfügung gestellt ist. Damit sinkt der Testaufwand und es steigt die Performance.

Da jede Generierung von Programmcode auch mit einer gewissen Fehlerwahrscheinlichkeit einher geht, wirkt es sich auf die Fehlerbilanz als vorteilhaft aus, daß der IP-Verarbeitungscode lediglich einmal als Standard erstellt zu werden braucht.

Die Aufgabe der Erfindung wird neben dem erfindungsgemäßen Verfahren ferner mit einer erfindungsgemäß und spezifisch angepaßten bzw. erweiterten Systemkomponente gelöst, die die Umwandlung von IP-Adreßformaten an zentraler Stelle innerhalb des Systems vorsieht.
Die Systemkomponente kann ein erweitertes Betriebssystem, ein erweiterter Compiler (bzw. Assembler oder Interpreter) oder eine spezifische Hardware Realisierung sein.
Eine Ausführungsform der Erfindung bezieht sich deshalb auf einen Compiler mit einer Bibliothek, in der eine Routine zur Verarbeitung von IP-Adressen enthalten ist.

In einer vorteilhaften weiteren Ausführungsform der Erfindung wird die Systemkomponente aus einem spezifischen Protokollprozessor, beispielsweise einem ASIC (Application Specific Integrated Circuit) gebildet. Diese Hardware Bausteine sind entweder speziell für die eine Anwendung, in diesem Fall die Formatkonvertierung von IP-Adressen ausgelegt oder die Formatkonvertierung wird in einen ASIC aus einem anderen Umfeld integriert.

Vorteilhafterweise ist die erfindungsgemäße Verlagerung der Routinenfunktionalität von Applikationsebene auf Systemebene prozessorunabhängig und kann für verschiedene Umgebungen eingesetzt werden.

Gegenstand der Erfindung ist allerdings nicht nur die vorstehend beschriebene Funktionalität der Routine zur Konvertierung von IP-Adressformaten, sondern ist weiterhin in einer Routine zu sehen, die eine andere Funktionalität bei der Verarbeitung von IP-Adressen aufweist. So ist beispielsweise auch die In- oder Dekrementation von IP-Adressen umfaßt.

Andere vorteilhafte Weiterbildungen der Erfindung ergeben sich aus den Unteransprüchen.

Weitere Vorteile der Erfindung und besondere Ausführungsformen mit deren Merkmalen sind in der nachfolgenden detaillierten Figurenbeschreibung dargestellt. Darin zeigt:
Fig. 1a eine schematische Darstellung eines Formates einer IP-Adresse in komprimierter Darstellung,
Fig. 1b eine schematische Darstellung des Formates des IP-Adresse in expliziter Darstellung und
Fig. 2 ein Flußdiagramm für eine Durchführung des Verfahrens gemäß einer bevorzugten Ausführungsform der Erfindung.

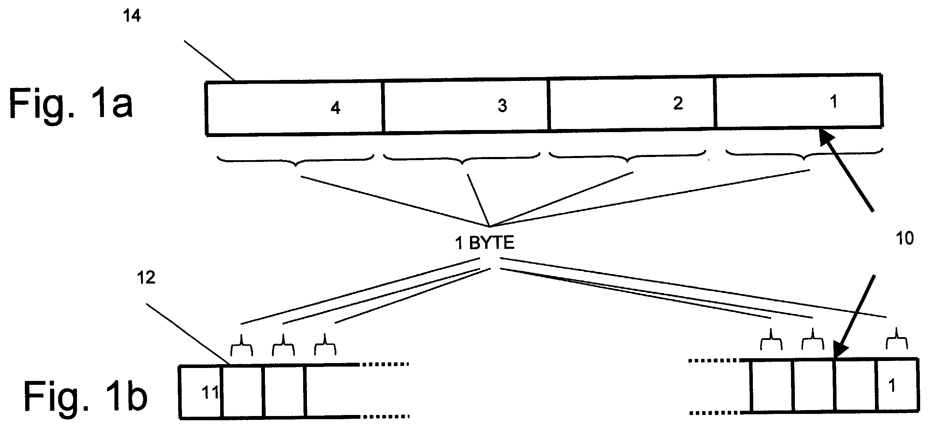

Nachfolgend wird unter Bezugnahme auf Figur 1 ein Beispiel für eine Darstellung einer im allgemeinen mit 10 bezeichneten IP-Adresse gezeigt.

Figur 1a zeigt eine übliche 32-bit-Darstellung bzw. eine Vier-Byte-Darstellung. Diese Darstellung wird nachfolgend als komprimiertes Format 14 bzw. komprimierte Darstellung 14 bezeichnet. Die in Figur 1a bzw. 1b dargestellte schematische Darstellung bezieht sich jeweils auf Little Endian Rechner, deren Numerierung der Speicherblöcke von rechts beginnend nach links erfolgt.
Die einzelnen Blöcke können Zahlenwerte von 0 bis 255 annehmen, also insgesamt 256 Zeichen.
Eine IP-Adresse 10 darf weltweit nur einmal vergeben werden, um eine eineindeutige Zuordnung zwischen der IP-Adresse 10 und dem entsprechenden Rechner zu ermöglichen.

Sollen IP-Adressen 10 nun verarbeitet werden, so ist es aus Performancegründen sinnvoll, eine komprimierte bzw. gepackte Darstellung 14 zu wählen. Neben diesem Format wird aber auch noch ein explizites Format 12 verwendet, das schematisch in Figur 1b dargestellt ist und größer ist als das komprimierte Format 14 der IP-Adresse 10. Aus Performancegründen wird das komprimierte Format 14 vorteilhafterweise zum Datentransfer eingesetzt. Doch ebenso kann aus Standardisierungsgründen ein Transfer des expliziten Formats 12 notwendig sein, das ansonsten üblicherweise für die Ausgabe auf dem Terminal verwendet wird. Unabhängig von der jeweiligen Anwendung ist bei allen IP-basierten Anwendungen eine Umwandlung der verschiedenen Formate 12, 14 der IP-Adresse 10 notwendig.

Fig. 1b zeigt schematisch ein Beispiel für ein explizites Format 12, das hier hexadezimal dargestellt ist und 11 Bytes umfaßt.

Um einen effiziente Datentransfer von IP-Adressen 10 zu ermöglichen, ist eine Umwandlung von dem expliziten Format 12 in das komprimierte Format 14 und umgekehrt notwendig.

Eine entsprechende Routine 16, die eine solche Umwandlungsfunktionalität zur Verfügung stellt, mußte bisher für jedes einzelne Applikationsprogramm, das IP-Adressen 10 verarbeitet stets neu codiert, compiliert und mit anderen Objekt-Files zusammen zu einem ausführbaren Applikationsprogrammcode gelinkt werden.

Dieses Vorgehen erweist sich aus verschiedenen Gründen als nachteilig, da die wiederholte Ausführung eines identischen Vorganges das Auftreten von Fehlern erhöht. Deshalb ist eine Standardisierung der Umwandlungsfunktionalität sinnvoll.

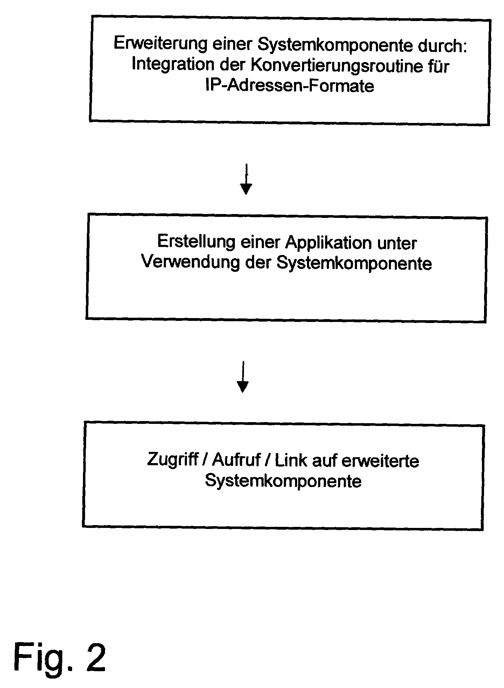

Wie in Figur 2 dargestellt, wird erfindungsgemäß die Routine 16, insbesondere die Umwandlungsroutine 16, an zentraler Stelle des Computersystems angeordnet und somit von der Applikationsebene auf die Systemebene verlagert. Dies wird ermöglicht, indem die Routine 16 in eine Systemkomponente 18, 20, 22 integriert wird, die definitionsgemäß fester Bestandteil des Systems ist. Die Erweiterung der Systemkomponente 18, 20, 22 findet zeitlich vor der Generierung des Applikationscodes statt und ist deshalb in der Zeichnung mit einer gestrichelten Linie von den zeitlich nachfolgenden Bereichen abgesetzt. Die Systemkomponente kann :
1. ein Compiler 18 (bzw. ein Assembler) sein, der diese Funktionalität der Umwandlung von IP-Adreßformaten umfaßt,
2. ein Betriebssystem 20, das die Funktionalität der Umwandlung von IP-Adreßformaten umfaßt und
3. ein Mikroprozessor 22, der Funktionalität der Umwandlung von IP-Adreßformaten bereits auf Hardwareebene bereit stellt.

Selbstverständlich liegen noch weitere Ausführungsformen im Rahmen dieser Erfindung, die ebenfalls die Integration einer Routine 16 zur Umwandlung von IP-Adreßformaten in einer zentralen Systemkomponente ermöglichen.

Soll die Routine 16 in den Compiler 18 integriert werden, dann kann dies durch den Aufruf einer entsprechenden Betriebssystemroutine erfolgen, falls das Betriebssystem diese Konvertierungsfunktionalität unterstützt. Andernfalls wird ein entsprechender Prozessor-Code generiert. Natürlich liegt auch eine Verwendung von einer Bibliothek im Rahmen der Erfindung, auf die über einen Compileraufruf zugegriffen wird und die eine zusätzliche Konvertierungsfunktion von IP-Adressen 10 ausführt, wie z.B. ein spezielles DLL-File "ip_convert" (Dynamic Link Library File).

Vorteilhaft erweist es sich dabei, daß die Routine 16 erfindungsgemäß nur einmal, nämlich im Rahmen des Integrationsvorganges kompiliert und gelinkt zu werden braucht. Dies führt zu einer deutlich verbesserten Performance, zu einer positiveren Arbeitsspeicher Bilanz und senkt die Fehlerwahrscheinlichkeit.

Die Aufgabe der Erfindung wird neben dem erfindungsgemäßen Verfahren ferner mit einer spezifisch angepaßten Systemkomponente 18, 20, 22 gelöst, die die Umwandlung von IP-Adreßformaten 12, 14 an zentraler Stelle innerhalb des Systems vorsieht.

Insbesondere kann das Betriebssystem 20 mit einer zentralen Konvertierungsroutine 16 von IP-Adressen 10 erweitert sein.

Bei zeitkritischen Anwendungen ist die Performance besonders wichtig. Hier erweist es sich als sehr sinnvoll, die Routine 16 nicht in Software vorzusehen sondern ebenso an zentraler Stelle im System, jedoch bereits auf Hardware Ebene bereit zu stellen. Dazu wird ein Mikroprozessor 22 mit Speicherelementen (RAM, ROM, EEPROM), insbesondere mindestens einem Register, mindestens einem Rechenwerk, einer I/O-Einheit und einem Daten- und Adreßbus verwendet, der zusätzlich eine Verarbeitungseinheit, insbesondere eine Konvertierungseinheit für IP-Adreßformate, aufweist. Die Verarbeitungseinheit umfaßt vorzugsweise ein Register, dessen Inhalt mit einer möglichst minimalen Taktzahl verarbeitet werden kann.

## Patentansprüche

1. Verfahren zur Bereitstellung von zumindest einer Routine (16) zur Verarbeitung einer IP-Adresse (10), insbesondere zur Konvertierung von unterschiedlichen Formaten (12, 14) der IP-Adresse (10), wobei die Routine (16) zur Erstellung von einer Vielzahl von internetspezifischen Applikationsprogrammen notwendig ist, indem
- die Routine (16) in zumindest eine Systemkomponente (18, 20, 22) integriert wird, und
- durch einen Link oder einen Zugriff in dem Applikationsprogramm bereit gestellt wird.

2. Verfahren nach Anspruch 1,
**dadurch gekennzeichnet, daß**
die Routine (16) eine Konvertierungsroutine für die Formate (12, 14) der IP-Adresse (10) ist.

3. Verfahren nach mindestens einem der vorstehenden Ansprüche,
**dadurch gekennzeichnet, daß**
die Routine verschiedene Formate (12, 14) der IP-Adresse (10) ineinander umwandelt, insbesondere ein explizites Format (12), das zur Darstellung der IP-Adresse (10) bestimmt ist, und ein komprimiertes Format (14), das für den Datentransfer bestimmt ist.

4. Verfahren nach mindestens einem der vorstehenden Ansprüche,
**dadurch gekennzeichnet, daß**
die Routine (16) auf dem Internet Protokoll IPv4 basiert und zugehörige Adreßformate verarbeitet.

5. Verfahren nach mindestens einem der Ansprüche 1 bis 3,
**dadurch gekennzeichnet, daß**
die Routine (16) auf dem Internet Protokoll IPv6 basiert und zugehörige Adreßformate verarbeitet.

6. Verfahren nach mindestens einem der vorstehenden Ansprüche,
**dadurch gekennzeichnet, daß**
die Routine (16) derart in der Systemkomponente (18, 20, 22) integriert ist, daß ein Kompilieren der Routine (16) bei Erstellung eines ausführbaren Applikationsprogrammcodes nicht notwendig ist.

7. Verfahren nach mindestens einem der vorstehenden Ansprüche,
**dadurch gekennzeichnet, daß**
die Systemkomponente ein Betriebssystem (20) ist, das als Umgebung für das Applikationsprogramm dient.

8. Verfahren nach mindestens einem der Ansprüche 1 bis 7,
**dadurch gekennzeichnet, daß**
die Systemkomponente ein Compiler (18) oder ein Assembler oder ein Interpreter ist, der zur Übersetzung des Applikationsprogramms verwendet wird.

9. Verfahren nach mindestens einem der Ansprüche 1 bis 7,
**dadurch gekennzeichnet, daß**
die Systemkomponente ein Mikroprozessor (22) ist, der die Routine (16) und/oder das Applikationsprogramm ausführt.

10. Systemkomponente, die zur Ausführung des Verfahrens nach zumindest einem der vorstehenden Ansprüche 1 bis 9 bestimmt ist,
**dadurch gekennzeichnet, daß**
die Systemkomponente (18, 20, 22) ein zusätzliches Mittel aufweist, das zur Verarbeitung einer IP-Adresse (10) bestimmt ist, insbesondere eine Konvertierung von verschiedenen Formaten (12, 14) der IP-Adresse (10) vorsieht.

11. Compiler, der zur Ausführung des Verfahrens nach mindestens einem der vorstehenden Ansprüche 1 bis 9 bestimmt ist, mit einer zusätzlichen Einheit, die zur Verarbeitung einer IP-Adresse (10), insbesondere von Formaten (12, 14) der IP-Adresse (10) bestimmt ist.

12. Compiler nach Anspruch 11,
**dadurch gekennzeichnet, daß**
eine Bibliothek, auf die der Compiler (18) bei der Übersetzung zu greift, ein Modul aufweist, das zur Verarbeitung einer IP-Adresse (10), insbesondere von Formaten (12, 14) der IP-Adresse (10) bestimmt ist.

13. Mikroprozessor, der zur Ausführung des Verfahrens nach mindestens einem der vorstehenden Ansprüche 1 bis 9 bestimmt ist, mit einer Verarbeitungseinheit, die eine Verarbeitung einer IP-Adresse (10), insbesondere eine Konvertierung von Formaten (12, 14) der IP-Adresse (10), ausführt, indem der Inhalt zumindest eines Registers bestimmten Verarbeitungsoperationen unterzogen wird.
